# EUROPÄISCHE PATENTANMELDUNG

(11) **EP 1 280 112 A1**
(43) Veröffentlichungstag der Anmeldung: **29.01.2003**
(21) Anmeldenummer: 01118147.6
(22) Anmeldetag: 26.07.2001
(51) Int. Cl.: G07F 7/10

(54) **Übertragen von Kartenfunktionalitäten**

(71) Anmelder: SIEMENS AKTIENGESELLSCHAFT, 80333 München (DE)
(72) Erfinder: Karger, Stephan, 46499 Hamminkeln (DE); Kreul, Theo, 46325 Borken (DE); Landenberger, Holger, Dr., 46395 Bocholt (DE); Langenfeld, Dirk, 40764 Langenfeld (DE); Schmidt, Malte, 46419 Isselburg (DE); Theisen, Rolf, 46397 Bocholt (DE)

(57) **Zusammenfassung**

Die Handhabung unzähliger Karten (1) wie Kreditkarten, Geldkarten, Firmenausweise etc. ist für den Benutzer insbesondere bei Verwendung von Geheimcodes mühsam. Daher werden die auf den Karten (1) gespeicherten Berechtigungsinformationen, ggf. einschließlich der Geheimcodes, in eine mobile Datenverarbeitungseinrichtung (2), z. B. Mobiltelefon, übertragen und anschließend an eine Berechtigungsprüfvorrichtung, die beispielsweise in einen Geldautomaten integriert ist, insbesondere berührungslos übermittelt. In einer Variante können die Berechtigungsinformationen von der mobilen Datenverarbeitungseinrichtung (2) auch auf eine Blankokarte (6) zumindest zeitweise übertragen werden.

## Beschreibung

Die vorliegende Erfindung betrifft ein Verfahren zum Übertragen von Berechtigungsinformation durch Bereitstellen mehrerer unabhängiger Berechtigungsdatensätze, die zu übertragen sind. Darüber hinaus betrifft die vorliegende Erfindung eine mobile Vorrichtung und eine Speicherkarte zum Speichern von Berechtigungsinformationen mit einer Schnittstelle zum Eingeben und Ausgeben der Berechtigungsinformation sowie einer Speichereinrichtung zum Speichern der Berechtigungsinformation.

Berechtigungskarten dienen dazu, eine Berechtigung zur Inanspruchnahme einer Funktion oder eines Dienstes durch Identifikations- oder Authentifikationsinformation nachzuweisen. Die bekanntesten Beispiele sind Kreditkarten für bargeldlosen Zahlungsverkehr, Karten für Geldautomaten zur Berechtigung von dessen Bedienung sowie Zugangskarten als Schlüsselersatz für Gebäudetüren.

Die Berechtigungskarten können personengebunden oder übertragbar sein. Übertragbar sind sie, wenn jede beliebige Person sie benutzen kann und die Prüfvorrichtung beispielsweise an einem Türöffner lediglich die Authentizität der Karte, also deren Echtheit, überprüft. Demgegenüber ist eine Berechtigungskarte personengebunden, wenn der Kartenbesitzer neben der Authentizität der Karte auch seine Identität nachweisen muss. Dies geschieht üblicherweise dadurch, dass der Besitzer eine Geheimzahl in die Prüfvorrichtung, z. B. den Geldautomaten, eingeben muss.

Derartige Berechtigungskarten finden immer größere Einsatzbereiche. Neben den bereits erwähnten Kreditkarten, Karten für Geldautomaten und Zugangskarten gibt es auch beispielsweise Versicherungskarten, Telefonkarten, Zeiterfassungskarten usw. Dabei sind Karten im Einsatz, die Informationen auf Magnetstreifen oder in integrierten Speicherchips speichern. Auch das Abgreifen der Information erfolgt auf unterschiedliche Weisen, wie elektrisches Kontaktieren oder beispielsweise induktives Abgreifen. Die Anzahl derartiger Karten, die ein Benutzer in Gebrauch hat, steigt ständig. Eine zu hohe Vielzahl, die der Benutzer ständig mit sich führen muss, erweist sich als nachteilig. Sofern sich der Benutzer zu den verschiedenen Karten noch unterschiedliche Geheimzahlen merken muss, stößt er rasch an seine natürlichen Grenzen.

Die Aufgabe der vorliegenden Erfindung besteht somit darin, die Berechtigung zum Zugang des Benutzers zu verschiedenen Systemen für den Benutzer einfacher und trotzdem sicher zu gestalten.

Erfindungsgemäß wird diese Aufgabe gelöst durch ein Verfahren zum Übertragen von Berechtigungsinformation durch Bereitstellen mehrerer unabhängiger Berechtigungsdatensätze, Speichern der Berechtigungsdatensätze in einer mobilen Datenverarbeitungsvorrichtung und Übermitteln eines der gespeicherten Berechtigungsdatensätze an eine Berechtigungsprüfvorrichtung.

In vorteilhafter Weise kann der Benutzer damit beispielsweise in sein Mobiltelefon die Berechtigungsinformationen und ggf. auch die entsprechenden Geheimzahlen in sein Mobiltelefon eingeben. Durch eine geeignete Schnittstelle übermittelt dann das Mobiltelefon die Berechtigungsinformation an eine Prüfvorrichtung.

Darüber hinaus wird die oben genannte Aufgabe gelöst durch eine mobile Vorrichtung mit einer Kartenschreibeinrichtung zum Beschreiben einer Speicherkarte mit Berechtigungsinformation, insbesondere mit einem von mehreren unabhängigen Berechtigungsdatensätzen.

Ferner wird erfindungsgemäß bereit gestellt eine Speicherkarte zum Speichern von Berechtigungsinformationen mit einer Schnittstelle zum Eingeben und Ausgeben der Berechtigungsinformation und einer Speichereinrichtung zum Speichern der Berechtigungsinformation, wobei die Berechtigungsinformation in der Speichereinrichtung zeitbegrenzt speicherbar ist.

Ein Benutzer könnte so beispielsweise mit seinem Mobiltelefon eine Blankokarte derart mit Information beschreiben, dass diese zumindest vorübergehend die Funktionalität besitzt, die von einer Originalkarte auf das Mobiltelefon übertragen wurde. Somit kann der Benutzer die Funktionalitäten mehrerer Karten von seinem Mobiltelefon abrufen und diese der Blankokarte zuweisen.

Die vorliegende Erfindung wird nun anhand der beigefügten Zeichnungen näher erläutert, in denen zeigen:
Fig. 1 eine Prinzipskizze zum erfindungsgemäßen Laden eines mobilen Endgeräts mit Funktionalitäten mehrerer Karten;
Fig. 2 eine Prinzipskizze zum Aktivieren eines erfindungsgemäßen mobilen Endgeräts; und
Fig. 3 eine Prinzipskizze zum erfindungsgemäßen Übertragen einer Funktionalität auf eine Blankokarte.

Die im Folgenden beschriebenen Ausführungsbeispiele stellen bevorzugte Ausführungsformen der vorliegenden Erfindung dar.

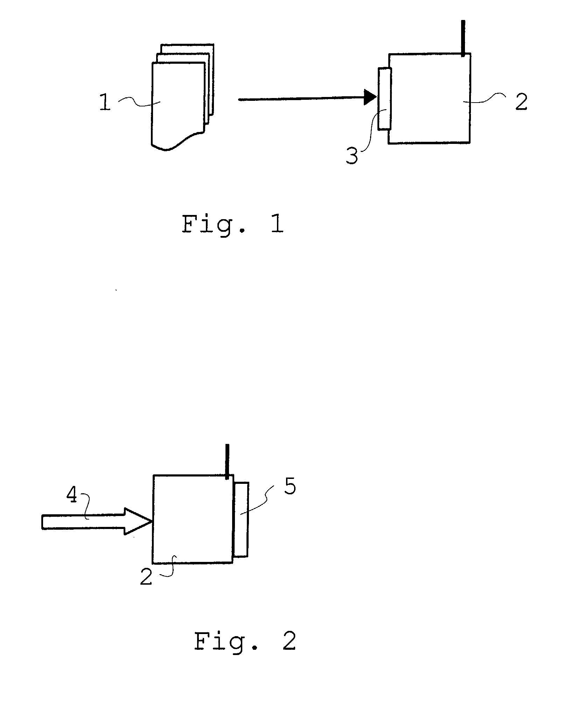

In Fig. 1 sind mehrere Berechtigungskarten 1 gezeigt. Jede der Berechtigungskarten 1 hat individuelle Berechtigungsinformationen in Form von Berechtigungsdatensätzen in einem integrierten Speicherchip, auf einem Magnetstreifen oder dergleichen gespeichert. Der Benutzer überträgt nun diese Berechtigungsinformation auf ein mobiles Endgerät 2. Dieses mobile Endgerät 2 ist beispielsweise ein Mobiltelefon, ein Notebook oder ein Organizer. Ebenso könnte der Benutzer die Berechtigungsinformationen der Berechtigungskarten 1 beispielsweise auf eine nicht dargestellte Armbanduhr oder ähnliche am Körper tragbare Einrichtung übertragen, sofern diese eine geeignete Eingabe-/Ausgabeschnittstelle umfasst.

Gemäß Fig. 1 umfasst das mobile Endgerät 2 eine Kartenschnittstelle 3, über die die Berechtigungsinformationen in das mobile Endgerät 2 eingelesen werden können. Dies kann beispielsweise ein Kartenlesemodul sein, welches die Berechtigungsinformationen aus den Berechtigungskarten 1 über elektrische Kontakte oder berührungslos, z. B. induktiv, ausliest.

Die in das mobile Endgerät 2 zu übertragenden Berechtigungsinformationen sind Datensätze, die in der Regel einen Code zur Authentifizierung enthalten, mit dem eine Prüfvorrichtung überprüft, ob die entsprechende Berechtigungskarte 1 echt ist. Neben diesen Authentifizierungsdaten können auf einer Karte aber auch weitere Informationen allgemeiner Art gespeichert sein. So werden beispielsweise auf einer Zeiterfassungskarte die Personalnummer und der Name des Besitzers gespeichert. Nachdem die Berechtigungsinformationen in unterschiedlichen Formaten auf den jeweiligen Karten gespeichert sind, sollte die Leseschnittstelle 3 möglichst flexibel gestaltet werden, um eine große Anzahl unabhängiger Berechtigungsinformationen von verschiedenen Berechtigungskarten 1 in das Mobiltelefon 2 einlesen zu können.

Beim Abspeichern der Berechtigungsinformation einer personenbezogenen bzw. nicht übertragbaren Berechtigungskarte 1 in das Mobiltelefon 2 kann der Benutzer neben der Karteninformation wahlweise auch seine dazugehörige Geheimzahl oder einen entsprechenden anderen Geheimcode in das Mobiltelefon 2 eingeben. Damit muss sich der Mobiltelefonbesitzer nicht mehr die Geheimzahlen derjenigen Karten merken, die er in seinem Mobiltelefon 2 abgespeichert hat. Die Zugriffssicherheit auf diese Geheimzahlen ist dadurch gewährleistet, dass zu Beginn der Benutzung eines Mobiltelefons der sogenannte PIN einzugeben ist.

Die Leseschnittstelle 3 muss nicht zwangsläufig als Kartenleser ausgestaltet sein. Vielmehr ist es auch möglich, dass diese Schnittstelle 3 als Computer- bzw. PC-Schnittstelle ausgestaltet ist. Damit könnten Berechtigungsinformationen in dem Mobiltelefon 2 über das Internet, mittels E-Mail und dergleichen eingelesen werden. Keiner besonderen Schnittstelle Bedarf es, wenn die Berechtigungsinformationen beispielsweise per SMS, WAP-Abruf etc. unmittelbar ins Mobiltelefon 2 eingespeichert werden können.

Fig. 2 zeigt nun die Aktivierung und Benutzung des erfindungsgemäßen Mobiltelefons bzw. der mobilen Vorrichtung 2. Wie bereits erwähnt, aktiviert der Benutzer sein Mobiltelefon durch die Eingabe eines PINs. Da nun die Berechtigungsinformationen und Geheimcodes von mehreren Karten 1 in dem Mobiltelefon 2 gespeichert sind, hat der Benutzer mit der Eingabe eines einzigen Zugangscodes, nämlich der PIN, Zugriff auf alle abgespeicherten Berechtungsinformationen ohne und ggf. mit jeweiliger Geheimzahl.

Die Berechtigungsinformation ist nun von dem Mobiltelefon 2 an eine Prüfvorrichtung zu übertragen. Hierzu kann das Mobiltelefon 2 und jedes andere Funkendgerät die Berechtigungsinformation an die Prüfvorrichtung per Funk senden, sofern die Prüfvorrichtung eine entsprechende Funkschnittstelle besitzt. Die Übertragung der Berechtigungsinformationen an die jeweiligen Prüfvorrichtungen kann grundsätzlich auf jede beliebige Art und Weise, z. B. durch elektrisches Kontaktieren, aber auch berührungslos erfolgen. Gängige berührungslose Übermittlungsverfahren sind induktive, kapazitive, optische, akustische oder elektromagnetische Übertragungen. Vielfach weisen Mobiltelefone 2 bereits entsprechende genormte Schnittstellen wie eine IrDA- oder Bluetooth-Schnittstelle auf.

Bankautomaten sind in der Regel nur mit personenbezogenen Karten zu betreiben. Daher arbeiten diese mit einem zweistufigen Sicherheitssystem. Zunächst wird die Authentizität der Karte überprüft und anschließend wird durch die Eingabe eines Geheimcodes geprüft, ob der Besitzer zur Verwendung der Karte berechtigt ist. Wird nun dieses zweistufige Sicherheitssystem durch das erfindungsgemäße Mobiltelefon, in dem die Berechtigungsinformationen gespeichert sind, realisiert, so kann hierzu ein Handshake-Verfahren verwendet werden. Demnach überträgt das Mobiltelefon 2 zunächst die Authentifizierungsinformation an die Prüfvorrichtung, so dass diese die grundsätzliche Berechtigung feststellen kann. Daraufhin sendet die Prüfvorrichtung an das Mobiltelefon 2 ein Berechtigungssignal bzw. ein Abfragesignal zum Abfragen des Geheimcodes. Daran anschließend sendet das Mobiltelefon 2 den passenden Geheimcode an die Prüfvorrichtung, womit die endgültige Berechtigung erteilt werden kann.

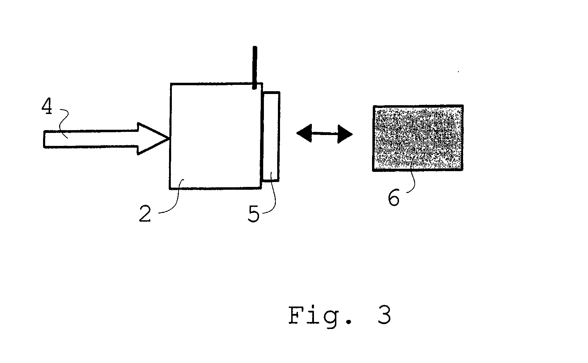

Fig. 3 zeigt eine zweite Ausführungsform der vorliegenden Erfindung. Das Mobiltelefon 2 entspricht im Wesentlichen dem von Fig. 2. Lediglich die Schnittstelle 5 zur Übermittlung der Berechtigungsinformationen an eine Prüfvorrichtung ist im Falle der zweiten Ausführungsform als Kartenschreiber ausgestaltet. Mit diesem Kartenschreiber 5 kann eine Blankokarte 6 beschrieben werden. Damit ist es möglich, dass die Blankokarte 6 nach Übertragung der entsprechenden Berechtigungsinformationen als Kreditkarte verwendbar ist. Werden entsprechend andere Informationen auf die Blankokarte 6 geschrieben, so kann diese beispielsweise die Funktionalität einer Zugangskarte zu einem Fitnesscenter oder die einer Versicherungskarte besitzen.

Das Mobiltelefon 2 gemäß der zweiten Ausführungsform kann, wie dies nicht dargestellt ist, ebenso wie die erste Ausführungsform gemäß Fig. 1 über eine Kartenleseschnittstelle 3 oder dergleichen verfügen. Die zweite Ausführungsform ermöglicht somit, dass mit einem einzigen Zugangscode 4 mittels der Blankokarte 6 Karten mit unterschiedlicher Funktionalitäten entsprechend unterschiedlichen Zugangscodes generiert werden können. Aus Sicherheitsgründen werden die Berechtigungsinformationen auf der Blankokarte 6 lediglich flüchtig gespeichert. Dieses flüchtige bzw. kurzzeitige Speichern der Informationen hat den Vorteil, dass die Karte nach gewisser Zeit ihre Funktionalität verliert und damit bei Verlust nicht in der Karte gespeicherte Zugangscodes preisgibt. Je nach Speichertechnik könnte die Speicherdauer beliebig gewählt werden, vernünftig wäre eine Zeit unterhalb von 30 Minuten, am besten ca. 10 Minuten. Nach Ablauf dieser Zeit könnte auch der Speicherinhalt auf der Karte 6 durch einen "Ablauftimer" aktiv wieder gelöscht werden.

Erfindungsgemäß ergeben sich damit insbesondere bei der ersten Ausführungsform die folgenden Vorteile:
- Es ist nur ein Gerät notwendig, das wie beispielsweise ein Mobiltelefon bzw. Handy ohnehin ständig zur Verfügung steht.
- Es ist bei der Verwendung dieses einzigen Geräts nur ein Zugangscode notwendig, um eine Vielzahl geschützter Funktionen ausführen zu können.
- Das Mitführen von unzähligen Karten entfällt und daher verringert sich die Gefahr eines unbemerkten Verlusts von Karten und die Gefahr von Missbrauch.
- Der Benutzer kann selbst entscheiden, welche Kartenfunktionalität er auf sein mobiles Terminal übertragen will, woraus sich eine hohe Flexibilität ergibt.

Bei der zweiten Ausführungsform ergeben sich darüber hinaus folgende Vorteile:
- Es ist nur eine universelle Karte notwendig.
- Die Funktionalitäten können zeitlich begrenzt übertragen und jederzeit wieder gelöscht werden.
- Die bereits vorhandenen herkömmlichen Geräte in Verbindung mit Karten können bei der zweiten Ausführungsform weiter benutzt werden.

## Patentansprüche

1. Verfahren zum Übertragen von Berechtigungsinformation durch
Bereitstellen mehrerer unabhängiger Berechtigungsdatensätze,
**gekennzeichnet durch**
Speichern der Berechtigungsdatensätze in einer mobilen Datenverarbeitungsvorrichtung (2) und
Übermitteln eines der gespeicherten Berechtigungsdatensätze an eine Berechtigungsprüfvorrichtung.

2. Verfahren nach Anspruch 1, wobei das Speichern in einem mobilen Endgerät eines Funknetzes, insbesondere in einem Mobiltelefon, einem tragbaren Computer oder Organizer, erfolgt.

3. Verfahren nach Anspruch 1, wobei das Speichern in einer Armbanduhr oder einer sonstigen am Körper tragbaren Einrichtung erfolgt.

4. Verfahren nach einem der Ansprüche 1 bis 3, wobei das Bereitstellen der Berechtigungsinformation durch eine Berechtigungskarte (1), insbesondere eine Zugangskarte, Kreditkarte, Versicherungskarte oder sonstige Identifizierungs- oder Authentifizierungskarte, durchgeführt wird.

5. Verfahren nach einem der Ansprüche 1 bis 4, wobei das Bereitstellen der Berechtigungsinformation ein Zurverfügungstellen durch daten- oder funknetztechnische Einrichtungen, insbesondere mittels E-Mail, SMS oder Internet-Zugang, umfasst.

6. Verfahren nach einem der Ansprüche 1 bis 5, wobei die Berechtigungsinformation Identifikations- und/oder Authentifikationsdaten umfasst.

7. Verfahren nach einem der Ansprüche 1 bis 6, wobei die Berechtigungsinformation mindestens einen Geheimcode und/oder personenbezogene Daten umfasst.

8. Verfahren nach einem der Ansprüche 1 bis 7, wobei das Übermitteln durch elektrisches Kontaktieren und/oder berührungslos, insbesondere induktiv, kapazitiv, optisch, akustisch oder elektromagnetisch, erfolgt.

9. Verfahren nach Anspruch 8, wobei das Übermitteln durch eine IrDA- oder Bluetooth-Schnittstelle erfolgt.

10. Verfahren nach einem der Ansprüche 1 bis 9, wobei das Übermitteln der gespeicherten Berechtigungsinformation an die Berechtigungsprüfvorrichtung ein Übertragen der gespeicherten Berechtigungsinformationen auf einen Datenträger (6), insbesondere eine Blankokarte, und Auslesen der Berechtigungsinformation aus dem Datenträger (6) durch die Berechtigungsprüfvorrichtung umfasst.

11. Verfahren nach einem der Ansprüche 1 bis 10, wobei das Übermitteln der gespeicherten Berechtigungsinformation durch ein Handshake-Verfahren erfolgt.

12. Verfahren nach einem der Ansprüche 1 bis 11, wobei die Berechtigungsprüfvorrichtung in einem Bankautomaten, I-dentifikationseinrichtung oder Authentifikationseinrichtung integriert ist.

13. Verfahren nach einem der Ansprüche 1 bis 12, wobei vor dem Speichern der Berechtigungsinformation in der mobilen Vorrichtung (2) eine Überprüfung der Berechtigung zum Speichern durch die mobile Vorrichtung insbesondere mittels Eingabe eines Geheimcodes, vorzugsweise einer PIN, erfolgt.

14. Mobile Vorrichtung
**gekennzeichnet durch**
eine Kartenschreibeinrichtung (5) zum Beschreiben einer Speicherkarte (6) mit Berechtigungsinformation, insbesondere mit einem von mehreren unabhängigen Berechtigungsdatensätzen.

15. Vorrichtung nach Anspruch 14, die als mobiles Endgerät (2) eines Funknetzes, insbesondere als Mobiltelefon, als tragbarer Computer oder Organizer, als Armbanduhr oder sonstige am Körper tragbare Einrichtungen ausgestaltet ist.

16. Vorrichtung nach Anspruch 14 oder 15 mit weiterhin einer Schnittstelle (3) zum Lesen einer Berechtigungs- oder I-dentifikationskarte.

17. Speicherkarte zum Speichern von Berechtigungsinformationen mit
einer Speichereinrichtung zum Speichern und Bereitstellen der Berechtigungsinformation,
**dadurch gekennzeichnet, dass** die Berechtigungsinformation in der Speichereinrichtung zeitbegrenzt speicherbar ist.

18. Speicherkarte nach Anspruch 17, wobei die Zeitbegrenzung auf höchstens 30 Minuten, vorzugsweise unter 10 Minuten, festgelegt ist.
